# EUROPÄISCHE PATENTANMELDUNG

(11) **EP 4 407 824 A1**
(43) Veröffentlichungstag der Anmeldung: **31.07.2024**
(21) Anmeldenummer: 24153790.1
(22) Anmeldetag: 24.01.2024
(51) Int. Cl.: H02G 3/22, F16L 5/02, H02G 15/013

(54) **WANDSTOPFEN**

(30) Priorität: 25.01.2023 DE 102023101788
(71) Anmelder: Kaiser GmbH & Co. KG, 58579 Schalksmühle (DE)
(72) Erfinder: Molodynski, Damian, 58313 Herdecke (DE); Viola, Marc, 58339 Breckerfeld (DE)
(74) Vertreter: Rentsch Partner AG

(57) **Zusammenfassung**

Die vorliegende Erfindung bezieht sich auf einen Wandstopfen (1) zum Einbau in eine Wandöffnung eines Wandsegmentes. Der Wandstopfen (1) umfasst eine sich in eine axiale Richtung von einem vorderseitigen Ende (7) zu einem rückseitigen Ende (6) erstreckende röhrenförmige Seitenwand (4), welche eine Durchgangsöffnung (5) umgibt. Zwischen dem vorderseitigen und dem rückseitigen Ende (7, 6) und in der Durchgangsöffnung (5) ist eine innere Dichtrippe (9) zum Abdichten eines in die Durchgangsöffnung (5) einführbaren Elektroinstallationsrohres angeordnet. Eine vorderseitige Raststruktur (10) zum Verrasten eines Rohradapters (3) ist ferner zwischen dem vorderseitigen Ende (7) und der inneren Dichtrippe (9) in der Durchgangsöffnung (5) angeordnet und/oder eine rückseitige Raststruktur (11) zum Verrasten eines Rohradapters (3) ist zwischen dem rückseitigen Ende (6) und der inneren Dichtrippe (9) in der Durchgangsöffnung (5) angeordnet.

## Beschreibung

Die vorliegende Erfindung betrifft einen Wandstopfen zum Einbau in eine Wandöffnung eines Wandsegmentes, insbesondere eines Wandsegmentes für den modularen Fertigbau von Gebäuden.

In Bauwerken werden für das Anbringen elektrischer Schalter, Steckdosen, Lampen, Apparate oder für Verzweigungen an den dazu vorgesehenen Stellen im Gebäude Installationsteile verwendet. In den entsprechenden Wandsegmenten eines Bauwerkes müssen folglich Installationsleitungen geführt werden.

In den letzten Jahren hat sich der modulare Fertigbau von Gebäuden stark entwickelt. Bei dieser Bauart werden Wandsegmente (wie z.B. eine Seitenwand, ein Boden oder eine Decke) vorkonfektioniert und an der Baustelle direkt zusammengesetzt. Die Wandsegmente können zwei zueinander beabstandete Wandungen (z.B. aus Holz) und mindestens ein Abstandselement zwischen den jeweiligen Wandungen umfassen. Mit Vorteil ist das mindestens eine Abstandselement rahmenförmig, sodass ein Hohlraum zwischen den Wandungen und dem rahmenförmigen Abstandselement gebildet wird. Der Hohlraum kann zumindest bereichsweise mit einem Isolationsmaterial oder Ähnlichem gefüllt sein. Ebenfalls dient der Hohlraum zum Verlegen von Elektroinstallationsrohren zum Durchführen der späteren Elektroinstallationsleitungen.

An den Schnittstellen von einem Wandsegment zu einem benachbarten Wandsegment (z.B. von einer Seitenwand zu einem Boden) sind hierbei Installationsteile vorgesehen, welche eine einfache und direkte Durchführung der Installationsleitungen von den Elektroinstallationsrohren eines Wandsegmentes in die Elektroinstallationsrohre des benachbarten Wandsegmentes ermöglichen.

Die Aufgabe der Erfindung ist es für ein derartiges Installationsteil einen Wandstopfen zum Einbau in eine Wandöffnung eines Wandsegmentes bereitzustellen, welcher einfach zu montieren ist. Eine weitere Aufgabe der Erfindung ist es einen Wandstopfen bereitzustellen, welcher variabel, d.h. für eine Mehrzahl von Anwendungsfälle, eingesetzt werden kann. Unterschiedliche Anwendungsfälle können zum Beispiel durch unterschiedliche Einbaurichtungen des Wandstopfens, unterschiedliche Aufbauten der Wandsegmente (z.B. Materialien der Wandungen) oder unterschiedliche Rohrdurchmesser eines durch den Wandstopfen durchführbaren oder einführbaren Elektroinstallationsrohrs definiert werden.

Die vorliegende Erfindung bezieht sich auf einen Wandstopfen zum Einbau in eine Wandöffnung eines Wandsegmentes (wie z.B. eine Seitenwand, ein Boden oder eine Decke) sowie ein Installationsteil umfassend einen derartigen Wandstopfen. Die Wandsegmente sind vorzugsweise Wandsegmente für den Fertigbau. Der Wandstopfen umfasst eine sich in eine axiale Richtung von einem vorderseitigen Ende zu einem rückseitigen Ende erstreckende röhrenförmige Seitenwand. Die Seitenwand umgibt eine Durchgangsöffnung, welche zum Einführen eines Elektroinstallationsrohres, insbesondere eines Endes eines Elektroinstallationsrohres, dienen kann. Damit ist gemeint, dass in einem montierten Zustand das Ende des Elektroinstallationsrohres innerhalb des Installationsteils jedoch insbesondere innerhalb des Wandstopfens, d.h. zwischen dem vorderseitigen Ende und dem rückseitigen Ende der Seitenwand, angeordnet ist. In manchen Anwendungen kann die Durchgangsöffnung alternativ zum Durchführen eines Elektroinstallationsrohres dienen. Der Wandstopfen umfasst weiter einen an dem vorderseitigen Ende von der röhrenförmigen Seitenwand seitlich abragenden Kragen. Der Kragen dient zur Auflage an einer die Wandöffnung umgebenden Oberfläche einer Wandung des Wandsegmentes. Die Oberfläche kann auf einer nach aussen gerichteten Aussenseite einer der beiden Wandungen des Wandsegmentes oder auf einer zum Hohlraum des Wandsegmentes hingerichteten Innenseite der jeweiligen Wandung angeordnet sein. Zwischen dem vorderseitigen und dem rückseitigen Ende des Wandstopfens und in der Durchgangsöffnung ist weiter eine (innere) Dichtrippe angeordnete. Die (innere) Dichtrippe dient zum Abdichten (insbesondere zum gasdichten Abdichten) des in die Durchgangsöffnung ein- oder durchführbaren Elektroinstallationsrohres. Die innere Dichtrippe ist mit Vorteil umlaufend und bildet eine Durchführöffnung für das Elektroinstallationsrohr aus. Die Durchführöffnung der Dichtrippe ist folglich in der Durchgangsöffnung der Seitenwand angeordnet und hat einen kleineren Durchmesser als die Durchgangsöffnung.

Der Wandstopfen kann weiter mindestens eine Raststruktur umfassen. Die jeweilige Raststruktur dient zum Verrasten eines Rohradapters. In der Regel wird hierbei von dem vorderseitigen Ende oder alternativ dem rückseitigen Ende ein Rohradapter wirkverbunden. Die Raststruktur kann in der Durchgangsöffnung angeordnet sein. Mit Vorteil ist hierbei eine vorderseitige Raststruktur zwischen dem vorderseitigen Ende und der inneren Dichtrippe angeordnet und/oder eine rückseitige Raststruktur zwischen dem rückseitigen Ende und der (inneren) Dichtrippe angeordnet. Die vorderseitige und/oder rückseitige Raststruktur können dazu ausgelegt sein, mit einer Gegenraststruktur eines Rohradapters zusammenzuwirken, wobei der Rohradapter hierzu in das jeweilige Ende der röhrenförmigen Seitenwand des Wandstopfens geschoben wird. Die (erste und/oder zweite) Raststruktur kann in Form einer umlaufenden oder mehrerer zumindest bereichsweise umlaufender Rippen ausgestaltet sein. Die Rippe(n) stehen über eine Innenseite der röhrenförmigen Seitenwand hervor und dienen dazu, dass die Gegenraststruktur hinter diesen verrasten kann. Ebenfalls denkbar ist jedoch eine (vorderseitige und/oder rückseitige) Raststruktur in Form einer umlaufende oder mehrere bereichsweise umlaufende Vertiefungen auf der Innenseite oder Durchbrüche in der Seitenwand, in welche die Gegenraststruktur des Rohradapters eingreifen kann.

Wenn eine erste und eine zweite Raststruktur vorhanden sind, kann der Rohradapter und/oder das Elektroinstallationsrohr sowohl in einer ersten Position als auch in einer zweiten Position mit dem Wandstopfen wirkverbindbar sein. In der ersten Position ist der Rohradapter von dem rückseitigen Ende mit der rückseitigen Raststruktur wirkverbunden (und bildet ein montiertes Installationsteil). In der ersten Position kann das Elektroinstallationsrohr zudem über das vorderseitige Ende an der vorderseitigen Raststruktur vorbei und durch die umlaufende innere Dichtrippe (respektive durch die Durchführöffnung) geführt werden um von diesem abgedichtet zu werden. In der zweiten Position ist der Rohradapter von dem vorderseitigen Ende mit der vorderseitigen Raststruktur wirkverbunden. Entsprechend kann das Elektroinstallationsrohr dann gegenüberliegend über das rückseitige Ende an der rückseitigen Raststruktur vorbei und durch die umlaufende innere Dichtrippe (respektive durch die Durchführöffnung) geführt werden um von diesem abgedichtet zu werden.

Je nach Ausgestaltung kann die innere Dichtrippe in eine radiale Richtung weiter in die Durchgangsöffnung hineinragen als die vorderseitige und/oder die rückseitige Raststruktur. Die Dichtrippe kann z.B. einen L- förmigen, T-förmigen oder einen kreuzförmigen Querschnitt aufweisen. Mit Vorteil umfasst die Dichtrippe eine Basis, über dessen proximales Ende die Dichtrippe an einer Innenseite der Seitenwand des Wandstopfens angebracht, insbesondere angeformt, ist. An einem dem proximalen Ende im Bezug zur Basis gegenüberliegenden distalen Ende der Basis kann weiter mindestens eine Dichtzunge angeordnet sein.

Die Dichtrippe, bzw. die Basis und/oder die mindestens eine Dichtzunge, kann (elastisch) deformierbar sein. In einem undeformierten Zustand kann die mindestens eine Dichtzunge zumindest bereichsweise radial nach innen von der Basis abragen. Alternativ oder ergänzend kann die mindestens eine Dichtzunge (in einem undeformierten Zustand) sich zumindest bereichsweise auch in die axiale Richtung erstecken und z.B. mit einer sich in die radiale Richtung erstreckenden Basis einen L oder T-förmigen Querschnitt der Dichtrippe ausbilden.

Die mindestens eine Dichtzunge und/oder die Basis dient dazu den Wandstopfen gegen das einführbare Elektroinstallationsrohr abzudichten. Mit Vorteil ist die Dichtrippe derart ausgestaltet, dass diese in einem wirkverbundenen Zustand des Wandstopfens mit dem Elektroinstallationsrohr an mindestens einem Wellenberg (vorzugsweise zwei Wellenbergen) des Elektroinstallationsrohres dichtend anliegt. Je nach Ausgestaltung bietet es sich ergänzend an, mindestens eine Dichtzunge derart auszugestalten, dass diese in ein Wellental des Elektroinstallationsrohres eingreift, so dass das Elektroinstallationsrohr von der Dichtrippe zusätzlich gehalten wird. Beim Abdichten ist die Dichtrippe mit Vorteil deformiert / in einem deformierten Zustand.

Unter deformierbar kann u.a. verstanden werden, dass die Dichtrippe in die axiale Richtung zum vorderseitigen und/oder zum rückseitigen Ende hin umbiegbar ist, insbesondere um die Basis umbiegbar. In dem umgebogenen Zustand kann so die Basis und/oder die mindestens eine Dichtzunge sich dichtend an das Elektroinstallationsrohr anschmiegen.

Mit Vorteil ist die (innere) Dichtrippe derart ausgelegt, dass eine erste Kraft zum Einstecken des Elektroinstallationsrohres in den Wandstopfen kleiner ist als eine zweite Kraft zum Rausziehen des Elektroinstallationsrohres aus dem Wandstopfen. Hierzu kann insbesondere die Dichtzunge dazu ausgelegt sein, sich beim Einstecken des Elektroinstallationsrohres umzubiegen und entlang dem Elektroinstallationsrohr anzuschmiegen. Beim Rausziehen des Elektroinstallationsrohres wird folglich die Dichtrippe durch eine auf diese dadurch wirkende Reibungskraft zunächst deformiert (z.B. gestaucht). Die Deformation kann ferner eine Wölbung der Dichtzunge radial nach innen bewirken, was wiederum zu einer Erhöhung der zweiten Kraft führt.

In einer möglichen Ausgestaltung umfasst die Dichtrippe eine Basis mit drei zueinander in die axiale Richtung beabstandeten Dichtzungen (eine mittlere und zwei äussere Dichtzungen). Die mittlere Dichtzunge ragt hierbei in dem undeformierten Zustand weiter in die Durchgangsöffnung hinein als die beiden äusseren Dichtzungen. Die mittlere Dichtzunge kann dazu dienen in ein Wellental des Elektroinstallationsrohrs einzugreifen und dieses so halten. Die beiden äusseren Dichtzungen können dazu dienen gegen je ein Wellenberg des Elektroinstallationsrohrs abzudichten. Die jeweiligen Wellenberge sind hierbei mit Vorteil die zum Wellental, in welche die mittlere Dichtzunge eingreift, benachbarten Wellenberge.

In einer möglichen Ausgestaltung kann mindestens eine Dichtrippe (in einem undeformierten Zustand) zwei seitlich von dem distalen Ende der Basis in die axiale Richtung abragende Dichtzungen aufweisen. Die Dichtrippe weist also einen T-förmigen Querschnitt auf. Die Dichtrippe ist hierbei bevorzugt umbiegbar, insbesondere um die Basis umbiegbar. Die Dichtrippe ist mit Vorzug derart ausgelegt, dass in einem umgebogenen Zustand der Dichtrippe (bei einem eingeführten Elektroinstallationsrohr) sich die Basis der Dichtrippe an ein oder mehrere Wellenberge des Elektroinstallationsrohrs anschmiegt und das Elektroinstallationsrohr abdichtet. Einer der beiden seitlich abstehenden Dichtzungen kann ferner in ein Wellental des Elektroinstallationsrohrs eingreifen und dieses halten.

Je nach Ausgestaltung kann der Kragen an eine zu dem rückseitigen Ende der Seitenwand hingewandte Auflagefläche aufweisen. Diese ist vorzugsweise ringförmig. Alternativ oder ergänzend kann an einem radial äusseren Ende des Kragens einen Dichtwulst angeordnet sein. Die Dichtwulst dient für eine verbesserte Dichtung zwischen der Oberfläche und dem Wandstopfen. Je nach Anwendung kann der Kragen weiter zumindest bereichsweise aus Hartplastikmaterial und/oder einem weichelastischen Material bestehen. Der Kragen kann zudem mindestens eine Befestigungsöffnung aufweist. Die Befestigungsöffnung kann dazu dienen den Kragen mit einem Befestigungsmittel, wie z.B. einer Schraube oder einem Nagel oder einer Klammer (Z.B. Tackerklammer), durch die jeweilige Befestigungsöffnung an dem Wandsegment zu befestigen. Die mindestens eine Befestigungsöffnung ist mit Vorteil in einem Befestigungsbereich des Kragens aus Hartplastikmaterial angeordnet. Alternativ oder ergänzend kann an einer Rückseite des Kragens eine Klebefläche zum Ankleben des Wandstopfens angeordnet sein. Die Klebefläche kann strukturiert sein. Die Rückseite des Kragens ist hierbei zum rückseitigen Ende des Wandstopfens hingewandt.

Zur Befestigung des Wandstopfens in der Wandöffnung kann an der Aussenseite der röhrenförmigen Seitenwand mindestens eine Befestigungsrippe angeordnet sein. Mit Vorteil ist die eine oder sind die mehreren Befestigungsrippen derart ausgestaltet, dass die Kraft zum Einstecken des Wandstopfens in die Wandöffnung geringer ist als die Kraft zum Entnehmen des Wandstopfens aus der Wandöffnung. Dies kann erreicht werden, wenn die Befestigungsrippen in einem montierten Zustand in der Wandöffnung einen Widerhaken in dem Wandsegment in die axiale Richtung ausbilden. Beispielsweise kann die Befestigungsrippe oder können die mehren Befestigungsrippen hierzu lamellenartig und/oder keilförmig und/oder mit mindestens einem Sägezahn ausgebildet sein.

Mit Vorteil ist die mindestens eine Befestigungsrippe zumindest bereichsweise umlaufend angeordnet. Je nach Anwendung kann die Befestigungsrippe oder die mehreren Befestigungsrippen dünnwandig und/oder lamellenartig ausgestaltet sein, sodass diese von der Seitenwand des Wandstopfens abstehen. Mit Vorteil sind Basen der Befestigungsrippen, mit welchem diese an der Seitenwand befestigt sind und in diese übergehen, parallel zum Kragen angeordnet. Je nach Ausgestaltung können die Befestigungsrippen sich weiter in einer Ebene parallel zum Kragen erstrecken oder winkelig von der Seitenwand abstehen. Beispielsweise können die dünnwandigen Befestigungsrippen in Richtung des vorderseitigen Endes der Seitenwand geneigt von der Seitenwand abstehen. Für einen besseren Halt in der Wand, können die Befestigungsrippen unter Krafteinwirkung (beim Einstecken des Wandstopfens) zumindest bereichsweise plastisch und/oder elastisch verformbar sein, sodass der Wandstopfen schwerer aus der Wandöffnung entfernbar ist. Beispielsweise können die Befestigungsrippen derart verformbar sein, dass die Befestigungsrippen nach der Montage stärker in Richtung des vorderseitigen Endes der Seitenwand geneigt sind und folglich mehr Kraft benötigt wird um den Wandstopfen wieder aus der Wandöffnung zu lösen. Hierfür können die Befestigungsrippen an ihrer Basis einen definierten Verformungsbereich für die plastische und/oder elastische Deformation aufweisen.

Alternativ oder ergänzend kann die Befestigungsrippe oder die Befestigungsrippen ebenfalls eine Keilform aufweisen. Der Keil kann eine von der Seitenwand abgehendende Schulter umfassen. Die Schulter bildet eine Schulterfläche aus, welche winkelig zur axialen Richtung angeordnet ist. Mit Vorteil zeigt die Schulter des Keils in Richtung des vorderseitigen Endes. Die von dem Keil ausgebildete Schulter an der Aussenseite der Seitenwand bildet so den Widerhaken in die axiale Richtung in dem montierten Zustand in der Wand. Zwischen benachbarter Schultern kann die mindestens eine Befestigungsrippe eine in Richtung des vorderseitigen Endes eine radial nach aussen schräg zulaufende Rampe umfassen.

Alternativ oder ergänzend können die Befestigungsrippe(n) sich in die axiale Richtung erstrecken und Sägezähne aufweisen, welche eine Verankerung in der Wandöffnung ermöglichen. Ein guter Halt wird erzielt, wenn die (Spitzen der) Sägezähne in Richtung des vorderseitigen Endes der Seitenwand geneigt ausgerichtet sind um den beschriebenen Effekt eines Widerhakens auszubilden. Die Befestigungsrippe(n) können beispielsweise jeweils mehrere in axialer Richtung hintereinander angeordnete Sägezähne aufweisen. Die sägezahnartige Befestigungsrippe(n) kann zumindest bereichsweise aus einem Hartplastikmaterial bestehen. Ergänzend kann die äussere Kante der Sägezähne mit einem weichelastischen Material überzogen sein. Mit Vorteil sind mehrere Befestigungsrippen mit Sägezähnen gleichmässig um den Umfang des Wandstopfens verteilt angeordnet.

Für eine verbesserte Dichtwirkung kann an der Aussenseite der röhrenförmigen Seitenwand mindestens eine äussere Dichtrippe angeordnet sein. Die äussere Dichtrippe kann zumindest bereichsweise aus weichelastischem Material bestehen. Die äussere Dichtrippe dient zum Abdichten des Wandstopfens gegen die Wandöffnung. Mit Vorteil sind die innere Dichtrippe und die äussere Dichtrippe in axialer Richtung an einer gleichen axialen Position an der Seitenwand angeordnet. Wenn die innere und die äussere Dichtrippe je zumindest bereichsweise aus dem weichelastischen Material bestehen und die Seitenwand zumindest bereichsweise aus Hartplastikmaterial besteht, können die innere und die äussere Dichtrippe über eine Materialbrücke aus weichelastischem Material, welche sich durch die Seitenwand erstreckt, miteinander verbunden sein. Dies vereinfacht die Herstellung im Spritzguss.

Je nach Anwendung können die Befestigungsrippe(n) auch zur Abdichtung des Wandstopfens gegen die Wandöffnung dienen. Dies ist insbesondere der Fall, wenn mindestens eine entsprechende Befestigungsrippe umlaufend und zumindest bereichsweise aus weichelastischem Material besteht, insbesondere der Teil der Befestigungsrippe, welche dazu ausgelegt ist in Kontakt mit der Wandöffnung zu treten. Für einen guten Halt in der Wandöffnung und eine zeitgleiche gute Abdichtung bietet es sich jedoch an, wenn mindestens eine Befestigungsrippe und mindestens eine von dieser sich baulich unterscheidende äussere Dichtrippe vorgesehen ist.

Mit Vorteil kann die mindestens eine äussere Dichtrippe die Form einer um die Seitenwand umlaufenden Lamelle haben. Die Lamelle(n) stehen mit Vorteil von der Seitenwand ab und können sich z.B. im Wesentlichen parallel zum Kragen erstrecken. Ja nach Anwendung kann der Wandstopfen auch mehrere äussere Dichtrippen im Form von Lamellen umfassen, welche sich in axialer Richtung nebeneinander erstecken.

Je nach Anwendung kann mindestens eine in der Durchgangsöffnung angeordnete Anlagefläche zur Anlage des Rohradapters vorgesehen sein. Die mindestens eine Anlagefläche kann im Wesentlichen normal zur axialen Richtung ausgerichtet sein. Auch eine winkelige Anordnung ist denkbar. Beispielsweise kann die Anlagefläche mit einem Winkel von 80° bis 90° zur axialen Richtung angeordnet sein. Mit Vorteil ist die mindestens eine Anlagefläche im Bereich des vorderseitigen Endes und /oder des rückseitigen Endes angeordnet. Die jeweilige Anlagefläche kann von dem vorseitigen und/oder von dem rückseitigen Ende zurückversetzt angeordnet sein.

Je nach Anwendung kann der Wandstopfen weichelastisches Material umfassen oder gänzlich aus diesem bestehen. Für bestimmte Anwendungen bietet es sich an, wenn der Wandstopfen bereichsweise neben den weichelastischen Material zumindest bereichsweise ein Hartplastikmaterial umfasst. Das weichelastische Material und/oder das Hartplastikmaterial können Spritzgussmaterialien sein. In anderen Worten kann der Wandstopfen mindestens ein, vorzugsweise zwei voneinander verschiedene Spritzgussmaterialien umfassen. Beispielsweise können die Befestigungsrippen und/oder der Kragen und/oder die Seitenwand zumindest bereichsweise auch aus Hartplastikmaterial, insbesondere Spitzgussmaterial, bestehen.

Je nach Ausgestaltung kann der Wandstopfen auch mehrteilig ausgestaltet sein. Beispielsweise kann der Wandstopfen zwei Halbschalen umfassen. Die Halbschalen sind bevorzugt miteinander entlang einer sich in die axiale Richtung erstreckenden Trennebene wirkverbindbar. Mit Vorteil erstreckt sich die Trennebene mittig durch den Wandstopfen. Hierbei kann sich die Trennebene (insbesondere mittig) durch die Durchgangsöffnung erstecken.

Die vorliegende Erfindung bezieht sich ebenfalls auf ein Installationsteil umfassend einen Wandstopfen (wie oben beschrieben) und einen Rohradapter. Vorzugsweise ist der Rohradapter hierbei sowohl über die vorderseitige Raststruktur an dem vorderseitigen Ende wirkverbindbar (zweite Position) als auch alternativ über die rückseitige Raststruktur an dem rückseitigen Ende wirkverbindbar (erste Position). Dies hat den Vorteil, dass der Wandstopfen variabel einbaubar ist und eine einfache Montage erlaubt.

Ein geeigneter Rohradapter in Kontext dieser Offenbarung kann einen Rohrkrümmer umfassen oder durch einen Rohrkrümmer gebildet sein. Der Rohrkrümmer dient dabei dazu die in dem Wandsegment verlaufenden Installationsleitungen in die in der Regel senkrecht ausgerichtete Wandöffnung, respektive der senkrecht ausgerichteten Durchgangsöffnung des in der Wandöffnung angeordneten Wandstopfens, umzuleiten. Der Rohradapter erstreckt hierbei sich von einer ersten Mündung zu einer zweiten Mündung. Zur Wirkverbindung mit der vorderseitigen und/oder rückseitigen Raststruktur des Wandstopfens kann der Rohradapter im Bereich der ersten Mündung mindestens eine Gegenraststruktur aufweisen. Die Gegenraststruktur kann mindestens ein in die radiale Richtung deformierbares Rastelement umfassen, welches dazu ausgelegt ist hinter der entsprechenden Raststruktur des Wandstopfens zu verrasten. Ebenfalls denkbar ist, dass die vorderseitige und/oder die rückseitige Raststruktur mindestens ein in die radiale Richtung deformierbares Rastelemente umfassen. In dem Fall kann die Gegenraststruktur im Form einer Vertiefung, Aussparung oder Rippe (wie oben im Kontext der Raststruktur des Wandstopfens beschrieben) ausgestaltet sein. Mit Vorteil weist der Rohradapter, insbesondere im Bereich der ersten Mündung, ebenfalls eine Anschlagfläche auf. Die Anschlagfläche dient dazu einen Anschlag für das Elektroinstallationsrohr in axialer Richtung bereitzustellen. Das entsprechende Elektroinstallationsrohr kann hierbei von dem gegenüberliegenden Ende der röhrenförmigen Seitenwand des Wandstopfens eingeführt werden, wie das Ende an dem der Rohradapter wirkverbunden ist. Die Anschlagfläche ist mit Vorteil in radialer Richtung weiter innen angeordnet wie die Gegenraststruktur. Im Bereich der zweiten Mündung kann der Rohradapter einen erweiterten Bereich zur Aufnahme eines Endes eines (weiteren) Elektroinstallationsrohres aufweisen.

Anhand der in den nachfolgenden Figuren gezeigten Ausführungsbeispiele und der dazugehörigen Beschreibung werden Aspekte der Erfindung näher erläutert. Es zeigen:
- Fig. 1: Einen Wandstopfen gemäss der Erfindung in einer ersten Variante in einer geschnittenen Ansicht;
- Fig. 2: Einen Wandstopfen gemäss der Erfindung in einer zweiten Variante in einer geschnittenen Ansicht;
- Fig. 3: Der Wandstopfen gemäss der ersten Variante in einer ersten wirkverbundenen Position in einer geschnittenen Ansicht;
- Fig. 4: Der Wandstopfen gemäss der ersten Variante in einer zweiten wirkverbundenen Position in einer geschnittenen Ansicht;
- Fig. 5: Der Wandstopfen gemäss der zweiten Variante in einer zweiten wirkverbundenen Position in einer geschnittenen Ansicht;
- Fig. 6: Das Installationsteil gemäss Fig. 5 während dem Einstecken eines Elektroinstallationsrohres in einer geschnittenen Ansicht;

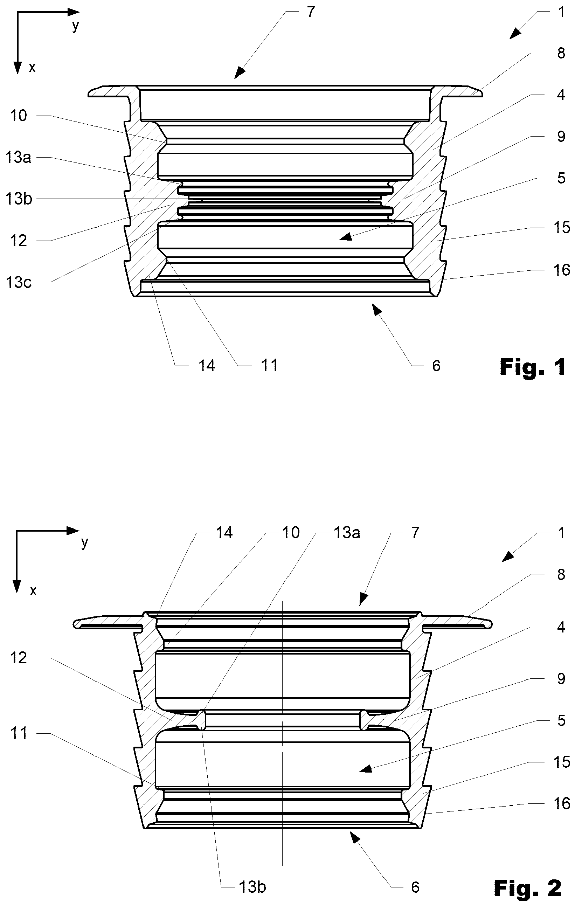

**Figur 1** und **Figur 2** zeigen je eine alternative Variante eines Wandstopfens 1 gemäss der Erfindung zum Einbau in eine Wandöffnung eines Wandsegmentes.

Der Wandstopfen 1 und der in den Figuren teilweise mit dargestellte Rohradapter 3 können zusammen ein Installationsteil 2 ausbilden. Der Wandstopfen 1 der ersten Variante (**Figur 1**) als auch der zweiten Variante (**Figur 2**) umfasst eine röhrenförmige Seitenwand 4, welche sich in eine axiale Richtung (x-Richtung) von einem vorderseitigen Ende 7 zu einem rückseitigen Ende 6 erstreckt und eine Durchgangsöffnung 5 umgibt. An dem vorderseitigen Ende 7 von der röhrenförmigen Seitenwand 4 kann hierbei seitlich ein Kragen 8 zur Auflage an einer die Wandöffnung umgebende Oberfläche des Wandsegmentes abragen. Zwischen dem vorderseitigen und dem rückseitigen Ende 7, 6 und in der Durchgangsöffnung 5 ist eine innere Dichtrippe 9 angeordnet, die zum Abdichten eines in die Durchgangsöffnung 5 ein- oder durchführbaren Elektroinstallationsrohres 17 dient. Die innere Dichtrippe 9 ist derart ausgelegt, dass in axialer Richtung sowohl vom vorderseitigen Ende 7 als auch vom rückseitigen Ende 6 ein Elektroinstallationsrohr 17 dichtend eingeführt bzw. durch die innere Dichtrippe 9 durchgeführt werden kann. Die innere Dichtrippe 9 weist eine Basis 12 und mindestens eine von der Basis 12 radial nach innen abragende Dichtzunge 13 auf, welche dazu ausgelegt ist das Elektroinstallationsrohr 17 abzudichten und es zu halten. Die beiden Varianten des Wandstopfens 1 unterscheiden sich lediglich durch die Ausgestaltung der (inneren) Dichtrippe 9.

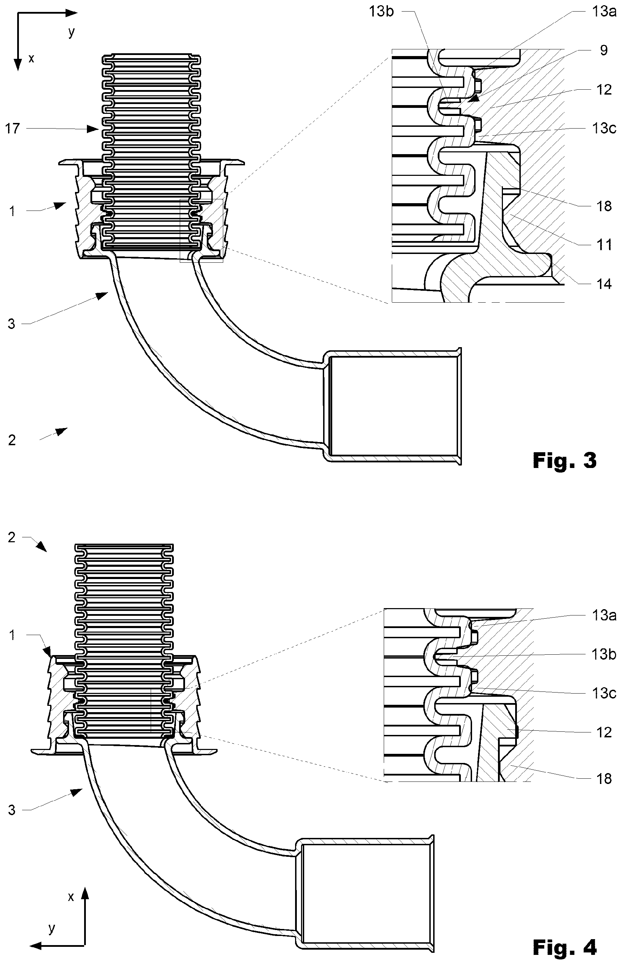

Die Dichtrippe 9 gemäss der ersten Variante (**Figur 1**) umfasst eine Basis 12 mit drei zueinander in die axiale Richtung beabstandeten Dichtzungen 13a, 13b 13c. Eine mittlere Dichtzunge 13b ragt hierbei in dem undeformierten Zustand weiter in die Durchgangsöffnung 5 hinein als die beiden äusseren Dichtzungen 13a, 13c. Die mittlere Dichtzunge 13b dient dazu in ein Wellental des Elektroinstallationsrohrs 17 einzugreifen und dieses so zu halten, wie in der Detailansicht der **Figur 3** dargestellt. Die beiden äusseren Dichtzungen 13c, 13c dienen dazu gegen je ein Wellenberg des Elektroinstallationsrohrs 17 abzudichten.

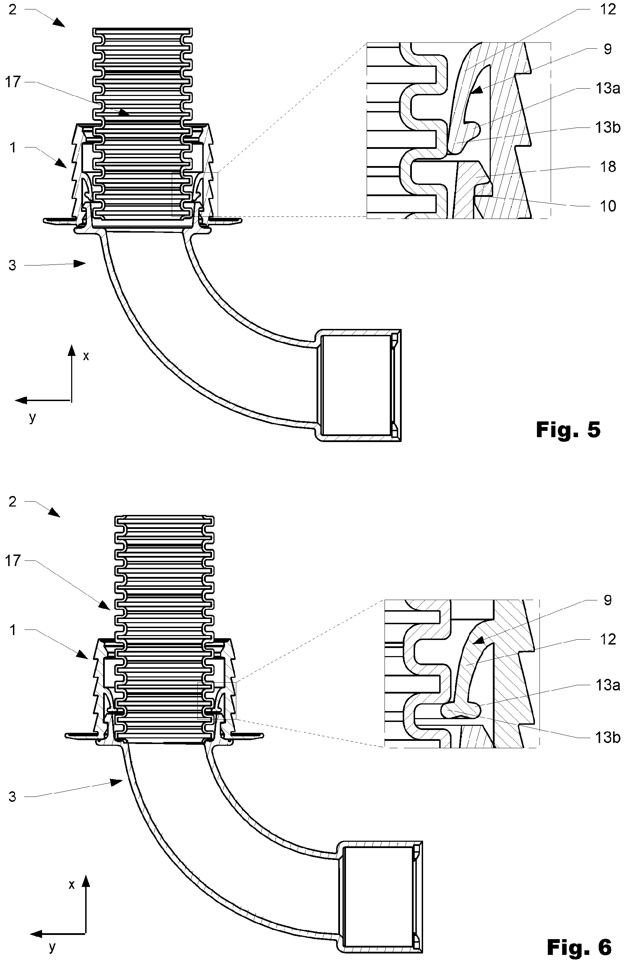

Der Wandstopfen 1 gemäss der zweiten Variante (**Figur 2**) umfasst stattdessen eine innere Dichtrippe 9 mit zwei seitlich von einem distalen Ende der Basis 12 in die axiale Richtung abragende Dichtzungen 13a 13b. Die Dichtrippe 9 weist also einen T-förmigen Querschnitt auf. Die Dichtrippe 9 ist hierbei umbiegbar, wie in der Detailansicht der **Figur 5** und **Figur 6** erkennbar. In dem dargestellten umgebogenen Zustand der Dichtrippe schmiegt sich die Basis 12 an mindestens ein Wellenberg des Elektroinstallationsrohrs 17 an und dichtet das Elektroinstallationsrohr 17 ab. Auch denkbar ist ein Anschmiegen an zwei benachbarte Wellenberge. Einer der beiden seitlich abstehenden Dichtzungen 13a 13b greift ferner in ein Wellental des Elektroinstallationsrohrs 17 ein und hält dieses (vgl. **Figur 6**).

Bei beiden Varianten des Wandstopfens 1 kann ferner zwischen dem vorderseitigen Ende 7 und der inneren Dichtrippe 9 und in der Durchgangsöffnung 5 eine vorderseitige Raststruktur 10 zum Verrasten des Rohradapters 3 angeordnet sein. Alternativ oder ergänzend kann zwischen dem rückseitigen Ende 6 und der inneren Dichtrippe 9 in der Durchgangsöffnung 5 eine rückseitige Raststruktur 11 zum alternativen Verrasten des Rohradapters 3 angeordnet sein. Zur Wirkverbindung mit der vorderseitigen und/oder rückseitigen Raststruktur 10, 11 des Wandstopfens 1 kann der Rohradapter 3 mindestens eine Gegenraststruktur mit einem Rastelement 18 umfassen. Bei beiden gezeigten Varianten des Wandstopfens sind sowohl eine vorderseitige als auch eine rückseitige Raststruktur 10, 11 vorhanden. Dies hat den Vorteil, dass der Rohradapter 3 und/oder das Elektroinstallationsrohr 17 sowohl in einer ersten Position (siehe z.B. **Figur 3**) als auch in einer zweiten Position (siehe z.B. **Figur 4**) mit dem Wandstopfen 1 wirkverbunden werden können. Wenn der Rohradapter 3 in der ersten Position von dem rückseitigen Ende 6 mit der rückseitigen Raststruktur 11 wirkverbunden ist, kann das Elektroinstallationsrohr 17 über das vorderseitige Ende 7 an der vorderseitigen Raststruktur 10 vorbei und durch die umlaufende innere Dichtrippe 9 gesteckt werden (und vice versa). Dies gilt ebenfalls für die zweite Variante des Wandstopfens, welche nur in der zweiten Position abgebildet ist (siehe **Figur 5** und **Figur 6**).

Mit Vorteil weist der Rohradapter 3 eine Anschlagfläche auf, um einen Anschlag in axialer Richtung für das einführbare Elektroinstallationsrohr 17 bereitzustellen. Das Elektroinstallationsrohr 17 ist hierbei in Bezug zum Wandstopfen 1 gegenüberliegend einführbar von dem Ende der röhrenförmigen Seitenwand 4, an welchem der Rohradapter 3 wirkverbunden wird. Wenn der Rohradapter 3 in der zweiten Position von dem vorderseitigen Ende 7 mit der vorderseitigen Raststruktur 10 wirkverbunden ist, kann das Elektroinstallationsrohr 17 über das rückseitige Ende 6 an der rückseitigen Raststruktur 11 vorbei und durch die umlaufende innere Dichtrippe 9 gesteckt werden (siehe **Figur 4**), bis dieses vorteilhafterweise an der Anschlagfläche des Rohradapters 3 zu liegen kommt. Damit dies einfach möglich ist, ragt die innere Dichtrippe 9 in eine radiale Richtung weiter in die Durchgangsöffnung 5 hinein als die vorderseitige und die rückseitige Raststruktur 10,11. In radialer Richtung ausserhalb der jeweiligen Raststrukturen 10, 11 befinden sich eine vorderseitige Anlagefläche 14 am vorderseitigen Ende 7 und eine rückseitige Anlagefläche am rückseitigen Ende 6. Die Anlagefläche 14 dient zur Anlage des Rohradapters 3. Die jeweilige Anlagefläche 14 kann von dem vorseitigen als auch von dem rückseitigen Ende 6, 7 zurückversetzt angeordnet sein.

Zur Befestigung des Wandstopfens 1, weisst dieser an einer (radial aussenliegenden) Aussenseite der Seitenwand 4 mehrere Befestigungsrippen 15 auf. Die Befestigungsrippen 15 sind dazu ausgelegt in einem montierten Zustand des Wandstopfens 1 in der Wandöffnung einen Widerhaken in der Wandöffnung in die axiale Richtung und in Richtung des vorderseitigen Endes 7 auszubilden. Wie gut in **Figur 1** oder **Figur 2** erkennbar, sind die Befestigungsrippen 15 hierzu jeweils keilförmig ausgebildet, jedoch sind auch andere Formen denkbar. Die keilförmige Befestigungsrippen 15 weisen hierbei je eine schräge Rampe 16 und eine Schulter auf.

Die dargestellten Wandstopfen 1 bestehen aus weichelastischem Material, insbesondere Spitzgussmaterial, jedoch sind auch Ausführungen denkbar bei denen der Wandstopfen 1 zumindest bereichsweise aus Hartplastikmaterial besteht. Beispielsweise können die Befestigungsrippen 15 und/oder der Kragen 8 und/oder die Seitenwand 4 zumindest bereichsweise auch aus Hartplastikmaterial, insbesondere Spitzgussmaterial, bestehen.

### LISTE DER BEZUGSZEICHEN

| | | | |
|---|---|---|---|
| 1 | Wandstopfen | 10 | Vorderseitige Raststruktur |
| 2 | Installationsteil | 11 | Rückseitige Raststruktur |
| 3 | Rohradapter | 12 | Basis |
| 4 | Seitenwand | 13 | Dichtzunge |
| 5 | Durchgangsöffnung | 14 | Anlagefläche |
| 6 | Rückseitiges Ende | 15 | Befestigungsrippe |
| 7 | Vorderseitiges Ende | 16 | Rampe |
| 8 | Kragen | 17 | Elektroinstallationsrohr |
| 9 | Dichtrippe | 18 | Rastelement |

## Patentansprüche

1. Wandstopfen (1) zum Einbau in eine Wandöffnung eines Wandsegmentes, der Wandstopfen (1) umfassend:
a. eine sich in eine axiale Richtung (x) von einem vorderseitigen Ende (7) zu einem rückseitigen Ende (6) erstreckende röhrenförmige Seitenwand (4), welche eine Durchgangsöffnung (5) umgibt;
b. eine zwischen dem vorderseitigen und dem rückseitigen Ende (7, 6) und in der Durchgangsöffnung (5) angeordnete innere Dichtrippe (9) zum Abdichten eines in die Durchgangsöffnung (5) einführbaren Endes eines Elektroinstallationsrohres;
c. eine zwischen dem vorderseitigen Ende (7) und der inneren Dichtrippe (9) in der Durchgangsöffnung (5) angeordnete vorderseitige Raststruktur (10) zum Verrasten eines Rohradapters (3) und/oder eine zwischen dem rückseitigen Ende (6) und der inneren Dichtrippe (9) in der Durchgangsöffnung (5) angeordnete rückseitige Raststruktur (11) zum Verrasten eines Rohradapters (3).

2. Wandstopfen (1) gemäss Patentanspruch 1, **dadurch gekennzeichnet, dass** die innere Dichtrippe (9) in eine radiale Richtung weiter in die Durchgangsöffnung (5) hineinragt als die vorderseitige oder die rückseitige Raststruktur (10,11).

3. Wandstopfen (1) gemäss einem der vorangehenden Patentansprüche, **dadurch gekennzeichnet, dass** die Dichtrippe (9) eine Basis (12) und eine von der Basis (12) radial nach innen abragende Dichtzunge (13) aufweist, welche dazu aufgelegt ist das Elektroinstallationsrohr (17) abzudichten.

4. Wandstopfen (1) gemäss einem der vorangehenden Patentansprüche, **dadurch gekennzeichnet, dass** zwischen dem vorderseitigen Ende (7) und der vorderseitigen Raststruktur (10) und/oder zwischen dem rückseitigen Ende (6) und der rückseitigen Raststruktur (11) eine in der Durchgangsöffnung (5) angeordnete Anlagefläche (14) zur Anlage des Rohradapters (3) vorgesehen ist.

5. Wandstopfen (1) gemäss einem der vorangehenden Patentansprüche, **dadurch gekennzeichnet, dass** an dem vorderseitigen Ende (7) von der röhrenförmigen Seitenwand (4) seitlich ein Kragen (8) zur Auflage an einer die Wandöffnung umgebende Oberfläche einer Wandung des Wandsegmentes abragt.

6. Wandstopfen (1) gemäss Patentanspruch 5, **dadurch gekennzeichnet, dass** der Kragen (8) zumindest bereichsweise aus Hartplastikmaterial und/oder einem weichelastischen Material besteht.

7. Wandstopfen (1) gemäss Patentanspruch 6, **dadurch gekennzeichnet, dass** der Kragen (8) eine Befestigungsöffnung aufweist, welche in einem Befestigungsbereich des Kragens aus Hartplastikmaterial angeordnet ist.

8. Wandstopfen (1) gemäss einem der vorangehenden Patentansprüche, **dadurch gekennzeichnet, dass** an einer Aussenseite der röhrenförmigen Seitenwand (4) mindestens eine Befestigungsrippe (15) angeordnet ist.

9. Wandstopfen (1) gemäss Patentanspruch 8, **dadurch gekennzeichnet, dass** mindestens eine Befestigungsrippe (15) dazu ausgelegt ist in einem montierten Zustand des Wandstopfens (1) in der Wandöffnung einen Widerhaken in der Wandöffnung in die axiale Richtung und in Richtung des vorderseitigen Endes (7) ausbilden.

10. Wandstopfen (1) gemäss Patentanspruch 8 oder 9, **dadurch gekennzeichnet, dass** mindestens eine Befestigungsrippe (15) lamellenartig und/oder keilförmig und/oder mit mindestens einem Sägezahn ausgebildet ist.

11. Wandstopfen (1) gemäss einen der Patentanspruch 8 bis 10, **dadurch gekennzeichnet, dass** mindestens eine Befestigungsrippe (15) dazu ausgelegt ist unter Krafteinwirkung zumindest bereichsweise plastisch und/oder elastisch verformbar zu sein.

12. Wandstopfen (1) gemäss einen der vorangehenden Patentansprüche, **dadurch gekennzeichnet, dass** an einer Aussenseite der röhrenförmigen Seitenwand (4) mindestens eine äussere Dichtrippe angeordnet ist, welche zumindest bereichsweise aus weichelastischem Material besteht.

13. Wandstopfen (1) gemäss Patentanspruch 12, **dadurch gekennzeichnet, dass** die innere Dichtrippe (9) und die äussere Dichtrippe je zumindest bereichsweise aus weichelastischem Material bestehen und über eine sich durch die Seitenwand (4) erstreckende Materialbrücke aus dem weichelastischen Material miteinander verbunden ist.

14. Wandstopfen (1) gemäss einen der vorangehenden Patentansprüche, **dadurch gekennzeichnet, dass** die innere Dichtrippe (9) derart ausgelegt, dass eine erste Kraft zum Einstecken des Elektroinstallationsrohres (17) in den Wandstopfen (1) kleiner ist als eine zweite Kraft zum Rausziehen des Elektroinstallationsrohres (17) aus dem Wandstopfen (1).

15. Wandstopfen (1) gemäss einem der vorangehenden Patentansprüche, **dadurch gekennzeichnet, dass** der Wandstopfen (1) mindestens ein Spritzgussmaterial, vorzugsweise zwei voneinander verschiedene Spritzgussmaterialien, umfasst.

16. Installationsteil (2) umfassend einen Rohradapter (3) und einen Wandstopfen (1) gemäss einem der vorangehenden Patentansprüche, wobei der Rohradapter (3) entweder über die vorderseitige Raststruktur (10) an dem vorderseitigen Ende (7) oder alternativ über die rückseitige Raststruktur (11) an dem rückseitigen Ende (6) wirkverbindbar ist.
